# FASCICULE DE BREVET EUROPEEN

(11) **EP 2 252 447 B1**
(45) Date de publication et mention de la délivrance du brevet: **14.12.2016**
(21) Numéro de dépôt: 09720118.0
(22) Date de dépôt: 26.02.2009
(51) Int. Cl.: B29C 45/14, B62D 29/04

(54) **PROCEDE DE FABRICATION D'UNE PIECE STRUCTURELLE DE VEHICULE AUTOMOBILE ET UNE TELLE PIECE**
VERFAHREN ZUR HERSTELLUNG EINES KRAFTFAHRZEUGSTRUKTURBAUTEILS UND STRUKTURBAUTEIL
METHOD FOR MAKING A STRUCTURAL PART FOR AN AUTOMOBILE AND PART THUS OBTAINED

(30) Priorité: 28.02.2008 FR 0851289
(43) Date de publication de la demande: 24.11.2010
(73) Titulaire: Compagnie Plastic Omnium, 69007 Lyon (FR)
(72) Inventeur: BALLESTEROS, Fernando, F-69006 Lyon (FR); GILLE, Denis, F-01100 Bellignat (FR); BOSG, Patrick, F-26240 St Barthelemy De Vals (FR)
(74) Mandataire: Remy, Vincent Noel Paul
(86) Numéro de dépôt international: PCT/FR2009/050309
(87) Numéro de publication internationale: WO 2009/112768

(56) Documents cités:
- WO-A-02/02292
- WO-A-99/59793
- WO-A-2007/051652
- FR-A- 2 783 796
- JP-A- 6 000 840
- US-A- 5 618 567

## Description

La présente demande concerne le domaine technique de la fabrication des pièces structurelles de véhicule automobile, en particulier mais non exclusivement des faces avant techniques, des supports d'ailes et des planchers.

On connaît déjà, dans l'état de la technique, notamment du document EP 0 370 342, un profilé métallique ayant une section en U, comprenant un fond, deux parois latérales et deux rebords liés chacun à une paroi latérale. Des nervures en matière plastique sont surmoulées sur le profilé. La pièce composite issue de l'opération de surmoulage peut être utilisée dans le domaine automobile.

Le profilé est percé de trous traversant ménagés sur ses rebords. Ces trous traversants forment, lors du surmoulage, un passage pour la matière plastique formant les nervures.

Pour alléger les véhicules automobiles, une tendance consiste à réaliser des pièces structurelles de véhicule automobile en matière plastique. Ainsi, dans la pièce composite précitée, le profilé métallique percé pourrait être remplacé par un profilé en matière plastique. Or, pour obtenir un élément à surmouler en matière plastique percé de trous traversants, on doit d'abord fabriquer l'élément en matière plastique (par exemple par extrusion ou par moulage par compression), puis poinçonner celui-ci aux endroits souhaités de façon à former des trous traversants.

Le document WO2007/051652 divulgue une pièce hybride comprennant un insert métallique mis en place dans un moule et une partie en matière plastique surmoulée sur l'insert.

L'invention a pour but de simplifier le procédé de fabrication de pièces surmoulées comprenant un élément à surmouler en matière plastique, tout en conservant des propriétés mécaniques satisfaisantes pour la pièce surmoulée.

A cet effet, l'invention a pour objet un procédé de fabrication d'une pièce surmoulée formant une pièce structurelle de véhicule automobile, le procédé comprenant :
- une étape de moulage lors de laquelle on moule au moins un élément de la pièce en un premier matériau à base de matière thermodurcissable, à l'aide d'un moule conformé pour qu'au moins une portion de l'élément forme un voile de matière,
- une étape de surmoulage lors de laquelle on surmoule un deuxième matériau à base de matière thermoplastique sur au moins l'un des voiles de matière formé dans l'élément, de sorte que le voile de matière est déchiré sous la pression du deuxième matériau, un passage pour le deuxième matériau étant alors formé au travers de l'élément.

Le moule comporte une matrice et un poinçon délimitant une chambre de moulage. Le moule comporte également un pavé de dimensions très inférieures à celle du moule et mis en place dans la matrice, et une broche située en face du pavé, mise en place dans le poinçon, la broche faisant saillie par rapport au poinçon et permettant de diminuer localement l'épaisseur de la chambre de moulage, de façon à former lors du moulage le voile de matière entre le pavé et la broche, le voile de matière étant en retrait par rapport à une face avant de la pièce formant dans ces portions un puits débouchant sur la face et ayant pour fond le voile de matière.

Ainsi, le procédé de fabrication de la pièce surmoulée ne nécessite pas d'étape spécifique de formation des trous traversants dans l'élément en matière thermodurcissable, le passage pour la matière thermoplastique étant créée lors de l'étape de surmoulage. Le procédé de fabrication de la pièce surmoulée est donc simplifié.

En outre, du fait de la présence du passage dans la matière thermodurcissable, une meilleure accroche mécanique de la matière thermoplastique sur la matière thermodurcissable est assurée.

L'épaisseur du voile de matière est de préférence inférieure à 1 mm, en particulier inférieure ou égale à 0.5 mm, notamment comprise entre 0.2 mm et 0.5 mm.

Le procédé selon l'invention peut également comprendre l'une ou l'autre des caractéristiques de la liste suivante :
- l'élément est moulé à l'aide d'un moule conformé pour que le voile de matière comporte une zone d'amorce de rupture, de préférence une zone de moindre épaisseur, située notamment sur le pourtour du voile de matière. Cette zone permet de faciliter la déchirure du voile de matière qui peut, de ce fait, être déchiré dans des conditions de surmoulage plus variées, notamment moins dépendantes de la direction du flux de matière et de la pression d'injection de celle-ci ;
- le deuxième matériau est surmoulé par injection ;
- le premier matériau est du SMC (acronyme anglais de Sheet Moulding Compound) ou de l'AMC (acronyme anglais de Advanced Moulding Compound) ;
- le deuxième matériau est le polypropylène (PP).

L'invention a également pour objet une pièce structurelle de véhicule automobile comprenant au moins un élément structurel réalisé en un premier matériau à base de matière thermodurcissable, au moins un passage étant formé dans le premier élément. Le passage est rempli d'un deuxième matériau à base de matière thermoplastique, la pièce comprenant en outre un voile de matière réalisé dans le premier matériau et noyé dans le deuxième matériau.

Une telle pièce est fabriquée à l'aide du procédé décrit ci-dessus. En effet, une fois le voile de matière déchiré lors de la deuxième étape, celui-ci est noyé dans la matière thermoplastique.

La pièce structurelle peut également comprendre l'une ou l'autre des caractéristiques de la liste suivante :
- l'élément structurel et le voile de matière sont liés ;
- le voile de matière et l'élément structurel forment deux pièces distinctes uniquement liées par l'intermédiaire du deuxième matériau. Ce cas correspond à celui dans lequel le voile de matière s'est détaché de l'élément en un seul morceau. Cela peut notamment se produire lorsque, avant le surmoulage, le voile de matière comprend une zone fragile sur son pourtour, une même pression étant appliquée sur toute la zone fragile ;

- la pièce forme une face avant technique de véhicule automobile ;
- l'élément structurel est sensiblement rectiligne et la pièce comprend au moins un montant sensiblement perpendiculaire à l'élément structurel réalisé dans le deuxième matériau ;
- la pièce comprend deux montants s'étendant vers le bas lorsque la face avant technique est montée sur un véhicule automobile et une traverse inférieure reliant les deux montants, les montants et la traverse étant réalisés dans le deuxième matériau ;
- le premier matériau est du SMC ou de l'AMC et/ou le deuxième matériau est le polypropylène ;
- la pièce comprend au moins une nervure couvrant un passage formé au travers de l'élément structurel, la nervure étant réalisée dans le deuxième matériau.

L'invention a également pour objet un élément structurel de véhicule automobile, obtenu suite à l'étape de moulage du procédé de fabrication selon l'invention.

L'élément structurel est plus précisément la pièce obtenue suite à l'étape de moulage du procédé de fabrication et avant l'étape de surmoulage du deuxième matériau.

L'invention sera mieux comprise à la lecture de la description qui va suivre de modes de réalisation donnés uniquement à titre d'exemples et, faite en se référant aux dessins dans lesquels :
- la figure 1 représente une pièce structurelle productible selon un mode de réalisation de l'invention ;
- la figure 2 illustre une étape de moulage d'un procédé de fabrication de la pièce structurelle de la figure 1 ;
- la figure 3 représente un élément structurel de la pièce de la figure 1, issu de l'étape de moulage illustrée à la figure 2 ;
- la figure 4 est une vue en coupe transversale selon IV -IV de la pièce structurelle de la figure 1 durant une étape de surmoulage du procédé de fabrication de cette pièce;
- la figure 5 est une vue rapprochée d'une partie V de la pièce de la figure 1 ;
- la figure 6 illustre une étape de moulage d'un procédé de fabrication d'une pièce structurelle selon un autre mode de réalisation de l'invention ;
- la figure 7 est une vue en coupe transversale d'une pièce surmoulée productible selon un autre mode de réalisation de l'invention.

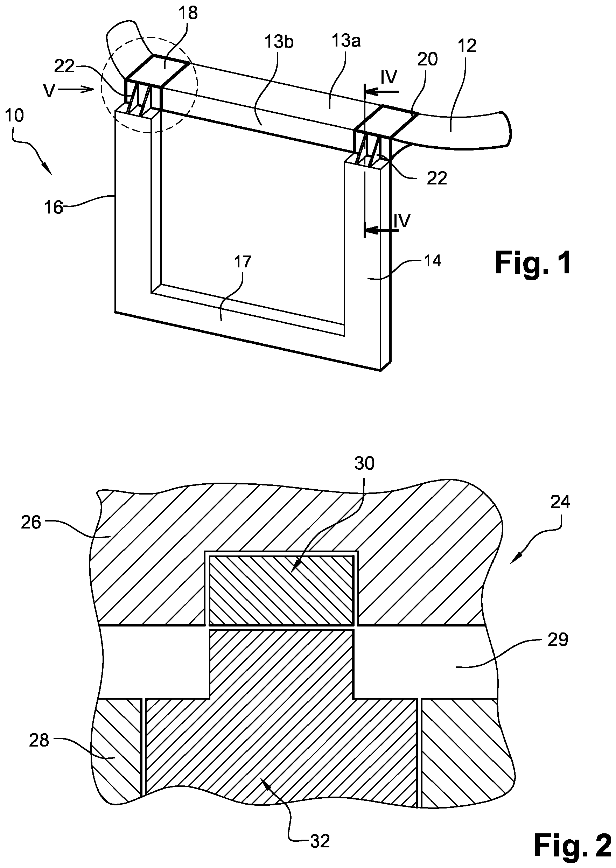

On a représenté, sur la figure 1, une pièce structurelle productible selon un mode de réalisation de l'invention. Cette pièce forme une face avant technique 10 de véhicule automobile.

La face avant technique 10 comprend une traverse 12, dite traverse supérieure, formant un élément structurel de la face avant technique.

La traverse 12 est réalisée en un premier matériau à base de matière thermodurcissable, tel que de l'AMC (acronyme anglais d' Advanced Moulding Compound) ou du SMC (acronyme anglais de Sheet Moulding Compound). Lorsqu'elle est montée sur le véhicule, cette traverse est essentiellement horizontale et de dimension longitudinale s'étendant selon la direction transversale du véhicule. Cette traverse forme un profilé, plus précisément un profilé à section en C, comprenant deux parois latérales 13a reliées essentiellement par la paroi tournée vers l'avant 13b de la traverse. Cette traverse a une fonction structurelle.

La face avant technique 10 comprend également deux montants 14 et 16 espacés sur la traverse supérieure 12 et s'étendant, lorsqu'ils sont montés sur le véhicule, essentiellement verticalement et vers le bas, perpendiculairement à la traverse supérieure 12. Ces montants 14, 16 permettent de supporter des éléments fonctionnels du véhicule tels qu'un bloc optique. Ils sont reliés à leur extrémité inférieure par l'intermédiaire d'une traverse 17, dite traverse inférieure, essentiellement parallèle à la traverse supérieure 12 et, une fois la face avant technique 10 montée sur le véhicule, sollicitée en cas de choc piéton. Les montant 14, 16 sont liés à la traverse supérieure 12 chacun dans une zone 18, 20 de celle-ci. Ils comportent des nervures 22, ménagées au voisinage de la zone de liaison 18, 20. Les montants 14, 16 et la traverse inférieure 17 sont réalisés en un deuxième matériau thermoplastique, tel que le polypropylène.

On va maintenant décrire, à l'aide des figures 2 à 5, un procédé de fabrication de la face avant technique de la figure 1.

Le procédé de fabrication de la face avant technique selon la figure 1 comprend une étape de moulage, lors de laquelle on moule la traverse supérieure 12 dans le premier matériau, ici de l'AMC ou du SMC. L'étape de moulage est effectuée à l'aide d'un moule conformé pour qu'au moins une portion de la traverse 12 forme un voile de matière.

L'épaisseur de chaque voile de matière est inférieure à 1 mm, de préférence inférieure ou égale à 0.5 mm, notamment comprise entre 0.2 mm et 0.5 mm.

Comme cela est représenté à la figure 2, le moule 24 comporte une matrice 26 et un poinçon 28, délimitant une chambre de moulage 29. Le moule 24 comporte également un pavé 30 de dimensions très inférieures à celle du moule et mis en place dans la matrice, et une broche 32 située en face du pavé 30, mise en place dans le poinçon. Cette broche 32 fait saillie par rapport au poinçon 28 et permet de diminuer localement l'épaisseur de la chambre de moulage, de façon à former lors du moulage un voile de matière entre le pavé 30 et la broche 32.

Le pavé 30 et la broche 32 rapportés dans le moule permettent de gérer l'usure du moule. En effet, au niveau du voile de matière, un composé de moulage renforcé de fibres tel que de l'AMC ou du SMC a tendance à comprendre un pourcentage de fibres localement plus important car il est conformé plus fin. Au niveau du voile de matière, le moule s'use plus rapidement que dans les parties permettant de mouler le reste de la pièce. Le fait de prévoir un pavé 30 et une broche 32 amovibles permet de changer les éléments servant à former cette zone du moule relativement souvent de façon à obtenir un voile de matière ayant l'épaisseur souhaitée, sans pour autant changer la totalité du moule et augmenter de ce fait les coûts de fabrication de la pièce.

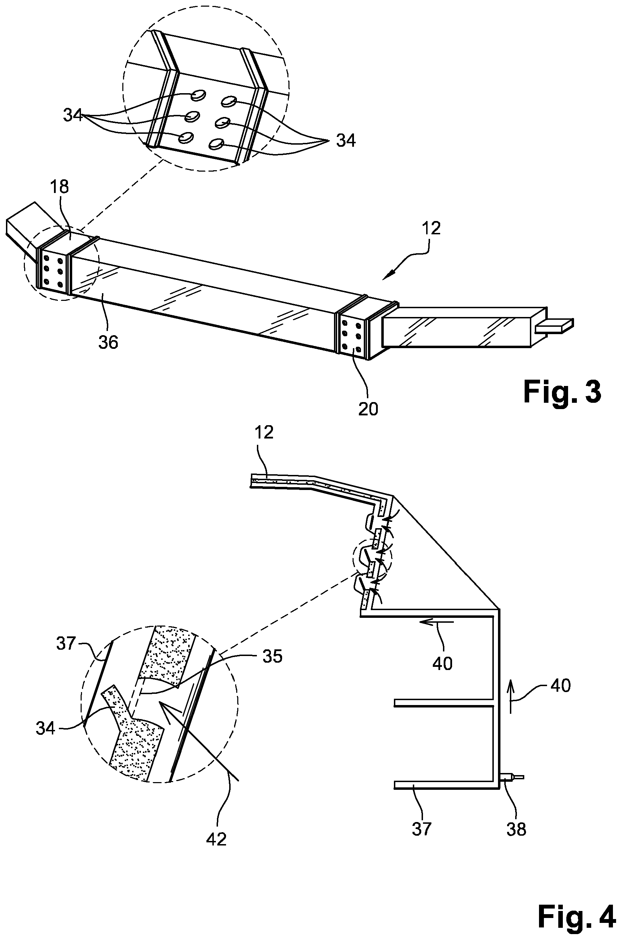

Suite à l'étape de moulage décrite plus haut, on obtient un élément structurel destiné à former la traverse supérieure 12 de la face avant technique, comme cela est visible sur la figure 3. Cet élément comprend, dans deux zones correspondant aux zones 18, 20 de liaison avec les montants de la face avant technique, une pluralité de portions formant un voile de matière 34. Dans chaque zone 18, 20 de l'élément structurel 12, six voiles de matière sont formés. Les portions formant voiles de matière 34 sont agencées de façon à former, lorsque la traverse est montée sur le véhicule automobile, deux rangées essentiellement verticales de trois voiles de matière. Chaque voile de matière a une forme essentiellement oblongue.

Les voiles de matière sont en retrait par rapport à la face avant 13b de la pièce, la pièce formant dans ces portions un puits débouchant sur la face 13b et ayant pour fond le voile de matière 34.

Une fois l'élément structurel mis en forme, le procédé de fabrication de la face avant technique comprend une étape de surmoulage, représentée à la figure 4, lors de laquelle on surmoule par injection un deuxième matériau à base de matière plastique, ici du polypropylène, sur l'élément structurel destiné à former la traverse 12, pour former les montants 14, 16 et la traverse inférieure 17. Le moule permettant de former les montants 14,16 et la traverse inférieure 17 comprend une chambre de moulage se fermant pour recouvrir chacune des zones 18 et 20, comportant les voiles de matière 34.

Comme on le voit sur la figure 4, la traverse 12 est placée dans un moule et le polypropylène est injecté par l'intermédiaire d'un point d'injection 38, d'un seul côté de l'élément structurel. Le polypropylène injecté sous pression circule dans le moule selon le sens représenté par les flèches 40. Lorsqu'il arrive sur l'une des zones formant voile de matière 34, le voile, qui était initialement dans la position représentée en pointillés sur le détail de la figure 4, se déchire, du fait de la pression du polypropylène accumulé sur le voile de matière et indiquée par les flèches 42 et de la finesse du voile de matière. Le polypropylène 37 peut alors s'engouffrer dans le passage laissé libre par la déchirure du voile de matière 34 et accrocher également sur le côté arrière de l'élément structurel.

Le voile de matière 34 est alors noyé dans le polypropylène 37 et est lié au reste de la traverse de sorte qu'il serait mobile en rotation selon un axe de la traverse 12 sans la présence du polypropylène 37.

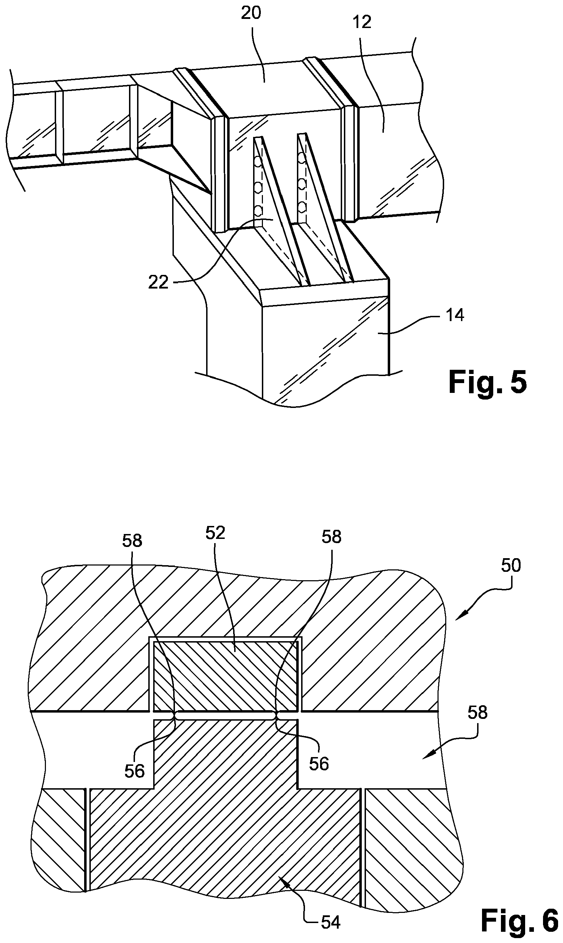

Comme on le voit aux figures 4 et 5, chaque montant 14 est surmoulé dans la zone 20 de la traverse supérieure 12, de sorte qu'il comporte deux nervures 22. Chacune de ces nervures recouvre le passage formé par la déchirure des voiles de matière 34 dans la traverse supérieure 12.

L'invention n'est pas limitée au mode de réalisation présenté ci-dessus.

En effet, comme cela est représenté à la figure 6, pour faciliter encore la rupture du voile de matière, un moule 50 permettant de réaliser l'étape de moulage peut être conformé de sorte que le voile de matière comprenne une zone de moindre épaisseur formant zone d'amorce de rupture de ce voile de matière. Cette zone est située sur le pourtour du voile de matière. Le pavé rapporté 52 et la broche rapportée 54 permettant de former le voile de matière comprennent chacun une indentation, respectivement 56, 58, en saillie de la surface du pavé 52 ou de la broche 54 formant le reste du voile de matière. Les indentations 56, 58 sont situées en vis-à-vis et permettent de diminuer l'épaisseur du voile de matière au niveau du pourtour de celui-ci.

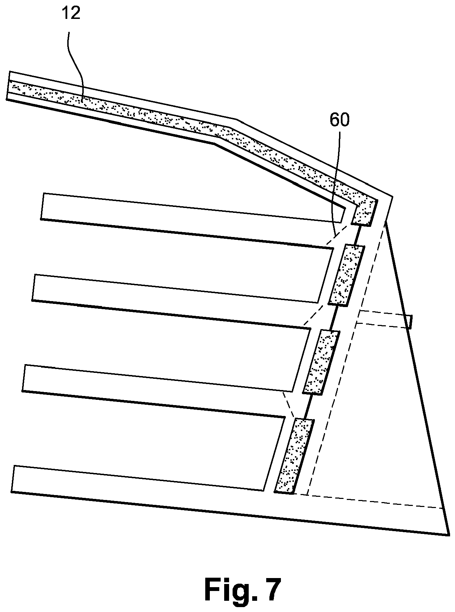

En outre, comme cela est également représenté à la figure 7, la forme de la pièce surmoulée peut varier même si celle-ci réalisée à l'aide d'une même traverse 12.

De plus, comme on le voit sur la figure 7, un voile de matière 60 peut être, une fois que l'étape de surmoulage a eu lieu, détaché du reste de la traverse 12 et former un élément distinct de cette traverse 12, en étant uniquement lié à cette traverse par l'intermédiaire du deuxième matériau surmoulé, par exemple le polypropylène.

Il est également à noter que l'injection de la matière thermoplastique lors de l'étape de surmoulage peut être effectuée de différentes manières. Le flux de matière peut notamment être parallèle ou perpendiculaire à une direction normale au voile de matière. En outre, l'injection peut être effectuée d'un ou des deux côtés. En effet, lorsque la pièce n'est pas symétrique, la matière injectée sous pression n'arrive pas en même temps des deux côtés du voile de matière et la pression est appliquée d'un seul côté du voile, et il existe donc une différence de pression entre les deux côtés du voile ce qui permet au voile de se déchirer, même dans le cas d'une injection des deux côtés de la pièce.

Il est également à noter que les matériaux et les formes des différents éléments de la face avant ne sont pas limités à ceux décrits.

La pièce structurelle peut également être un autre type de pièce structurelle du véhicule automobile que celle décrite, tel qu'un support d'aile ou un plancher de véhicule automobile.

## Revendications

1. Procédé de fabrication d'une pièce surmoulée (10) formant une pièce structurelle de véhicule automobile, **caractérisé en ce qu'**il comprend :
- une étape de moulage lors de laquelle on moule au moins un élément (12) de la pièce (10) en un premier matériau à base de matière thermodurcissable, à l'aide d'un moule (24;50) comportant une matrice (26) et un poinçon (28), délimitant une chambre de moulage (29), le moule (24) comportant également un pavé (30) de dimensions très inférieures à celle du moule et mis en place dans la matrice, et une broche (32) située en face du pavé (30), mise en place dans le poinçon, la broche (32) faisant saillie par rapport au poinçon (28) et permettant de diminuer localement l'épaisseur de la chambre de moulage (29), de façon à former lors du moulage un voile de matière entre le pavé (30) et la broche (32), un tel voile de matière étant en retrait par rapport à une face avant de la pièce, la pièce formant dans ces portions un puits débouchant sur la face et ayant pour fond le voile de matière,
- une étape de surmoulage lors de laquelle on surmoule un deuxième matériau à base de matière thermoplastique sur au moins l'un des voiles de matière (34) de l'élément (12), de sorte que le voile de matière (34) est déchiré sous la pression (42) du deuxième matériau, un passage (35) pour le deuxième matériau étant alors formé au travers de l'élément.

2. Procédé de fabrication (50) selon la revendication précédente, dans lequel l'élément est moulé à l'aide d'un moule (50) conformé pour que le voile de matière comporte une zone d'amorce de rupture, de préférence une zone de moindre épaisseur, située notamment sur le pourtour du voile de matière.

3. Procédé de fabrication selon l'une quelconque des revendications précédentes, dans lequel le premier matériau est du SMC (acronyme anglais de Sheet Moulding Compound) ou de l'AMC (acronyme anglais de Advanced Moulding Compound).

4. Procédé de fabrication selon l'une quelconque des revendications précédentes, dans lequel le deuxième matériau est le polypropylène (PP).

5. Procédé selon l'une quelconque des revendications précédentes, dans lequel le deuxième matériau est surmoulé par injection et il existe une différence de pression entre les deux côtés du voile de matière.

6. Procédé selon la revendication précédente, dans lequel l'injection est effectuée d'un seul des deux côtés du voile de matière.

7. Procédé selon la revendication 5, dans lequel l'injection de matière est effectuée des deux côtés du voile de matière, de sorte que lorsque la pièce n'est pas symétrique, la matière injectée sous pression n'arrive pas en même temps des deux côtés du voile de matière.

## Patentansprüche

1. Verfahren zur Herstellung eines aufgeformten Teils (10) zur Bildung eines Strukturbauteils eins Kraftfahrzeugs, **dadurch gekennzeichnet, dass** es Folgendes umfasst:
- einen Schritt zum Formen, bei dem mindestens ein Element (12) des Teils (10) aus einem ersten Werkstoff auf Basis eines duroplastischen Materials mit Hilfe eines Formwerkzeugs (24; 50) mit einer Matrize (26) und einer Patrize (28), die eine Formkammer (29) begrenzen, geformt wird, wobei das Formwerkzeug (24) ferner einen Block (30), dessen Abmessungen als die des Formwerkzeugs sind und der in der Matrize angeordnet ist, und einen Stift (32) aufweist, der sich dem Block (30) gegenüber befindet und in der Patrize angeordnet wird, wobei der Stift (32) relativ zu der Patrize (28) hervorsteht und ermöglicht, lokal die Dicke der Formkammer (29) zu verringern, so dass beim Formen eine Materialbahn zwischen dem Block (30) und dem Stift (32) gebildet wird, wobei eine derartige Materialbahn relativ zu einer Vorderseite des Teils zurückgezogen ist, wobei das Teil in diesen Abschnitten einen Schacht bildet, der an der Fläche mündet und als Boden die Materialbahn hat,
- einen Schritt des Aufformens, bei dem ein zweiter Werkstoff auf Basis eines duroplastischen Materials auf mindestens einer der Materialbahnen (34) des Elements (12) aufgeformt wird, wodurch die Materialbahn (34) unter dem Druck (42) des zweiten Werkstoffs zerreißt, wobei dann ein Durchlass (35) für den zweiten Werkstoff durch das Element hindurch gebildet wird.

2. Herstellungsverfahren (50) nach dem vorhergehenden Anspruch, bei dem das Element mit Hilfe eines Formwerkzeugs (50) geformt wird, das so ausgebildet ist, dass die Materialbahn eine Anrisszone aufweist, vorzugsweise eine Zone geringerer Dicke, die sich insbesondere an dem Umfang der Materialbahn befindet.

3. Herstellungsverfahren nach einem der vorhergehenden Ansprüche, bei dem der erste Werkstoff SMC (englische Abkürzung für Sheet Moulding Compound) oder AMC (Advanced Moulding Compound) ist.

4. Herstellungsverfahren nach einem der vorhergehenden Ansprüche, bei dem der zweite Werkstoff Polypropylen (PP) ist.

5. Verfahren nach einem der vorhergehenden Ansprüche, bei dem der zweite Werkstoff durch Einspritzen aufgeformt wird und zwischen den zwei Seiten der Materialbahn ein Druckunterschied besteht.

6. Verfahren nach dem vorhergehenden Anspruch 5, bei dem das Einspritzen nur auf einer der zwei Seiten der Materialbahn erfolgt.

7. Verfahren nach Anspruch 5, bei dem das Einspritzen von Material auf beiden Seiten der Materialbahn erfolgt, so dass, wenn das Teil nicht symmetrisch ist, das unter Druck eingespritzte Material nicht zur gleichen Zeit beide Seiten der Materialbahn erreicht.

## Claims

1. Method for manufacturing an overmoulded part (10) that defines a structural part for a motor vehicle, **characterised in that** it comprises:
- a moulding step during which at least one member (12) of the part (10) is moulded from a first material containing a thermosetting material, using a mould (24;50) which comprises a die (26) and a stamp (28) forming a moulding chamber (29), the mould further comprising a block (30) of dimensions much smaller than those of the mould and placed in the die(26), and a spindle (32) located opposite the block (30), placed in the stamp; the spindle (32) projecting past the stamp (28) and being used to reduce the thickness of the moulding chamber locally, so as to form during the moulding a material web (34) between the block (30) and the spindle (32), the material web being recessed with respect to a front side of the part, the part forming in these portions a well opening onto the side and whose bottom is the material web,
- an overmoulding step during which a second material containing a thermoplastic material is overmoulded on at least one of the material webs (34) of the member (12) so that the material web (34) is torn under the pressure (42) of the second material, a passage (35) for the second material being then formed through the member.

2. Manufacturing method (50) according to the preceding claim, wherein the member is moulded using a mould (50) shaped so that the material web comprises an incipient break zone, preferably a zone of reduced thickness, located in particular on the periphery of the material web.

3. Manufacturing method according to any of the preceding claims, wherein the first material is SMC (Sheet Moulding Compound) or AMC (Advanced Moulding Compound).

4. Manufacturing method according to any of the preceding claims, wherein the second material is polypropylene (PP).

5. Method according to any of the preceding claims, wherein the second material is overmoulded by injection and there is a pressure difference between the two sides of the material web.

6. Method according to the preceding claim, wherein the injection is carried out from only one of the two sides of the material web.

7. Method according to claim 5, wherein the injection is carried out from both sides of the material web, such that when the part is not symmetrical, the material injected under pressure does not reach both sides of the material web at the same time.
